# EUROPÄISCHE PATENTSCHRIFT

(11) **EP 3 014 149 B1**
(45) Veröffentlichungstag und Bekanntmachung des Hinweises auf die Patenterteilung: **09.08.2017**
(21) Anmeldenummer: 14755322.6
(22) Anmeldetag: 26.06.2014
(51) Int. Cl.: F16J 15/3232, F16J 15/322, F16J 15/324

(54) **RADIALWELLENDICHTUNG**
RADIAL SHAFT SEAL
JOINT D'ARBRE RADIAL

(30) Priorität: 29.06.2013 DE 102013010926
(43) Veröffentlichungstag der Anmeldung: 04.05.2016
(73) Patentinhaber: NIDEC GPM GmbH, 98673 Auengrund /OT Merbelsrod (DE); VR Automotive Dichtungssysteme GmbH, 98673 Auengrund-Crock (DE)
(72) Erfinder: BLECHSCHMIDT, Andreas, 98544 Zella-Mehlis (DE); SCHAUB, Martin, 98646 Hildburghausen (DE)
(86) Internationale Anmeldenummer: PCT/DE2014/000326
(87) Internationale Veröffentlichungsnummer: WO 2014/206393

(56) Entgegenhaltungen:
- DE-A1-102008 010 338

## Beschreibung

Die Erfindung betrifft eine Radialwellendichtung zur Abdichtung einer aus einem mit einem fluiden Medium beaufschlagten Raum herausgeführten rotierenden Welle, mit einem Dichtungsgehäuse, mindestens einem im Dichtungsgehäuse angeordneten, mittels einer Dichtlippe an der Welle dichtend anliegenden ringförmigen Dichtkörper, und mindestens einen den/die Dichtkörper im Dichtungsgehäuse positionierenden ringförmigen, metallischen Stützkörper, zur Abdichtung eines mit Flüssigkeit gefüllten Innenraumes gegenüber einem Außenraum, vorzugsweise der Atmosphäre.

Einsatzbereiche solcher Wellendichtungen sind der Maschinen-, der Apparate- und der Kraftfahrzeugbau, wie zum Beispiel die Abdichtung der Antriebswellen von Kühlmittelpumpen gegenüber dünnflüssigen, wasserbasierenden Kühlmedien mit leicht schmieren Zusätzen.

Aus der DE 10 2008 010 338 A und der DE 10 2008 010 341 A sind Radialwellendichtungen für Wasserpumpen, mit zwei voneinander beabstandet angeordneten Dichtkörpern bekannt, welche jeweils zwei dichtend an der Welle linienförmig anliegende Dichtlippen aufweisen.

Charakteristisch für die beiden letztgenannten Bauformen ist, dass beide Dichtkörper jeweils gleich ausgebildet sind und daher in der gleichen Werkzeugform gefertigt werden können.

Gegenüber der DE 10 2008 010 338 A weist die DE 10 2008 010 341 A einen Sammelraum für Leckageflüssigkeit auf, in den ein drehfest mit der abzudichtenden Welle verbundenes Schleuderelement hineinragt.

Für all diese vorgenannten Bauformen ist charakteristisch, dass die an der Welle, bzw. an einer auf der Welle angeordneten Wellen-Laufhülse linienförmig anliegenden Dichtlippen der Dichtkörper "keilförmig" ausgebildet sind, d.h. dass diese schmalen, im Betriebszustand an die Welle, bzw. die Wellen-Laufhülse angepressten Linienflächen der Dichtkörper einem hohen Verschleiß unterliegen, wobei die Dichtlippen des dem Innenraum benachbarten Dichtmembrankörpers, welche am stärksten mit Schmutzfracht konfrontiert sind, zuerst verschleißen, so dass die weiter außen angeordneten Dichtlippen des zweiten Dichtmembrankörpers dann die durch die verschlissenen Lippen hindurchtretende Leckage abdichten müssen.

D.h. bei diesen Bauformen übernimmt nach dem Verschleiß der "ersten" Dichtung die nachgeschaltete "zweite" Dichtung dann deren Aufgabe.

Da jedoch die Dichtlippen des zweiten Dichtmembrankörpers ungekühlt auf der Welle, bzw. der Wellen-Laufhülse "laufen", unterliegen diese zwangsläufig einem erhöhten Verschleiß und werden nach relativ kurzer Einsatzzeit hart.

Dadurch verlieren sie ihre für die Vermeidung von Leckagen zwingend erforderliche Dichtspannung und können nach einer gewissen Einsatzzeit (d.h. dann, wenn sie eigentlich gebraucht werden) ihre Aufgabe als Dichtung nicht mehr vollständig erfüllen, so dass die Leckageverluste dieser Wellendichtungen über die Betriebslaufzeit deutlich zunehmen.

In der von der Anmelderin hinterlegten DE 101 41 138 C2 wird eine weitere Radialwellendichtung mit zwei voneinander beabstandet angeordneten, gegen die Druckrichtung schräg gestellten, linienförmig an der Welle dichtend anliegenden Dichtlippen vorbeschrieben, welche an zwei ineinander angeordneten Dichtkörpern angeordnet sind, wobei zwischen beiden Dichtkörpern ein Stützkörper angeordnet ist, der die dem Innenraum benachbarte Dichtmembran an ihrer von der Innenkammer abgewandten Seite stützt. In den Raum zwischen den beiden Dichtungsmembranen wurde bei dieser Bauformen ein Hochtemperaturfett gefüllt.

Aus der WO 002007101429 A1, ist eine weitere Lösung der Anmelderin für eine Radialwellendichtung mit zwei voneinander beabstandet angeordneten, gegen die Druckrichtung schräg gestellten, linienförmig an der Welle dichtend anliegenden Dichtlippen bekannt, bei der der Raum zwischen den beiden Dichtungsmembranen ebenfalls mit einem Hochtemperaturfett befüllt wurde.

Der Sachverhalt, dass gemäß der in der DE 101 41 138 C2, wie auch in der in der WO 002007101429 A1 vorgestellten Lösung der Raum zwischen den beiden Dichtungsmembranen mit einem Hochtemperaturfett befüllt wurde, hatte in Verbindung mit der in diesen beiden Bauformen vorliegenden Dichtungslippengeometrien zur Folge, dass das Hochtemperaturfett mit einem Tropfpunkt von ca. 200 °C im Anlaufzustand der Kühlmittelpumpe zähflüssig an den Wandungen "klebt", und keine Schmierung der mit geringer Anpresskraft, linienförmig an der Laufhülse anliegenden keilförmigen Dichtlippen bewirken kann.

Auf Grund des Fehlens eines aktiven Innendruckes in der Innenkammer, wie auch des Fehlens einer anderen, wirksamen Anpresskraft um die dem "Trockenraum" zugewandte Lippe gegen die Welle zu drücken, neigen diese Lippen zu Kontaktverlusten zur Welle, wodurch selbst ein dünnflüssigeres Schmiermittel sehr schnell aus dem Raum zwischen den beiden Dichtlippen entweichen würde.

Auf Grund des beschrieben "Fehlens" von Schmiermittel tritt an der dem Trockenraum" zugewandte Lippe ein sehr hoher Verschleiß auf.

Zudem sind aus dem Stand der Technik Lösungen bekannt, bei denen eine äußere Elastomerlippe mit einer darunter liegenden Lippe aus Kunststoff mit hohem PTFE- Anteil kombiniert wird, wobei zwischen beiden Lippen eine geringe Menge handelsüblichen Schmierfettes eingebracht wird, dabei dient das Fett wiederum zur Kurzzeitschmierung der Elastomer-Lippe.

Bei Trocken-Dauerläufen ohne Kühlmedium über mehrere Stunden stellte sich jedoch heraus, dass die bei diesen Bauformen breitflächig auf der Welle aufliegende Kunststofflippe durch den Eintrag der Reibenergie verschleißt. Das zwischen den beiden Lippen eingebrachte handelsübliche Schmierfett zeigt keinesfalls die erwünschten laufverbessernden Wirkungen.

Bei anderen Lippengeometrien mit großflächig, bzw. großflächigen an der Welle anliegenden Dichtlippen, wie diese beispielsweise in der DE 917 942 A, der DE 977 331 A, der US 2 467 210 A, der US 2 630 357 A, der US 5 303 935 A oder auch der DE 10 2010 0 44 427 A1, tritt dieser erhöhte Verschleiß nach relativ kurzer Einsatzzeit in Verbindung mit schwach schmierenden Medien (Kühlflüssigkeiten) im Kantenbereich der großflächig an die Welle angepressten Dichtlippen auf, da mit der Inbetriebnahme sofort Mischreibung und dadurch ein erhöhter Verschleiß entsteht, so dass auch bei den doppellippigen Dichtsystemen mit großflächig an der Welle bzw. der Wellenhülse anliegenden Dichtlippen alle bereits vorbeschriebenen Nachteile auftreten, die insbesondere darin bestehen, dass im Trockenlauf-Betrieb beide Lippen, und im Standardbetrieb mit Kühlmedium die innere, d.h. die dem Kühlmedium abgewandte Lippe, nach Inbetriebnahme der Pumpe, einem sehr starkem Verschleiß unterliegt.

Dieser nach Inbetriebnahme der Pumpe im Kühlkreislauf auftretende Startverschleiß kann zu einer extremen Schädigung der Lippendichtung und zu deren vorzeitigen Ausfall führen.

Alle im Stand der Technik vorbeschriebenen Lösungen können das Grundproblem der erhöhten Startreibung bei Inbetriebnahme des Kühlkreislaufes nicht lösen.

Die in diesem Zusammenhang auftretende problematische Tribologie führt nach relativ kurzer Laufzeit stets zum Versagen der dem Wasserpumpenlager zugewandten Dichtlippe, da diese in der Startphase ungeschmiert in Trockenreibung arbeitet und dadurch Temperatur und Verschleiß stark ansteigen.

Die Ursache dieses starken Startverschleißes kann nur dadurch erklärt werden, dass die innere Lippe unter normalen Betriebsbedingungen generell solange trocken läuft, bis Kühlmedium durch die äußere Lippe zur inneren Lippe durchdringt, und diese dann "schmiert" / "schmieren könnte".

Für die in den vg. Bauformen eingesetzten Elastomerdichtlippen, wie auch die dort eingesetzten PTFE- basierenden Kunststoffdichtlippen ist dieser Zeitraum des Trockenlaufes bei höherer Drehzahl und Fehlen von Kühlflüssigkeit bei tribologisch ungünstiger Mischreibung/Trockenreibung so lang, dass nach relativ kurzer Laufzeit Schädigungen, d.h. ein "Verbrennen" durch Mischreibungs- oder Trockenreibungsverschleiß, eintreten, die eine vollständige Zerstörung der inneren Lippe zur Folge haben, so dass im weiteren Betrieb nur die äußere Lippe noch eine dichtende Funktion übernehmen kann.

"End of line" Motorentests, d.h. Motortests über bis zu mehreren Stunden mit Kühlmittelpumpen ohne Kühlflüssigkeit, haben jedoch bei allen vorgenannten Bauformen von in Kühlmittelpumpen eingesetzten Radialwellendichtungen eine vollständige Zerstörung der Dichtlippen zur Folge.

Weitere Nachteile der im Stand der Technik beschriebenen Bauformen resultieren zudem aus der Vielzahl einzelner Bauteile aus denen die im Stand der Technik vorbeschriebenen Radialwellendichtungen bestehen, wie aus der für deren funktionsgerechte Fertigung und Montage resultierenden Fertigungsgenauigkeit, die die mit der Fertigung und der Montage verbundenen Kosten deutlich erhöhen.

Ein weiteres, gegenwärtig bestehendes Problem beim Einsatz von Radialwellendichtungen in Kühlsystemen von Kraftfahrzeugen besteht darin, dass die Erstbefüllung der Kühlsysteme derart erfolgt, dass das Kühlsystem mittels einer Saugpumpe evakuiert, auf Dichtheit geprüft, und anschließend unter Nutzung des erzeugten Unterdruckes luftfrei mit Kühlmittel befüllt wird.

Dabei haben die zuvor beschriebenen Verschleißerscheinungen an den Dichtlippen auf diese Erstbefüllung selbstverständlich keine Auswirkungen.

Doch da bereits viele Werkstätten im Rahmen von Instandsetzungs- bzw. Instandhaltungsarbeiten mit Unterdruck luftfrei befüllen, kann über undichte verschlissene Dichtlippen Luft, mit den daraus resultierenden Nachteilen, in den Kühlkreislauf gelangen.

Die Aufgabe der Erfindung besteht daher darin eine neuartige Radialwellendichtung zur Abdichtung einer aus einem mit einem fluiden Medium gefüllten Raum herausgeführten rotierenden Welle gegenüber der Atmosphäre zu entwickeln, welche auch in Kühlmittelpumpen, unter Einsatz von dünnflüssigen, wasserbasierenden Kühlmitteln mit leicht schmierenden Zusätzen, die vorgenannten Nachteile des Standes der Technik beseitigt, selbst "end of line" Motorentests mit Kühlmittelpumpen ohne Kühlflüssigkeit über bis zu mehrere Stunden ohne Beschädigung der Radialwellendichtung ermöglicht, und bei rotierender Welle den Verschleiß, und insbesondere den Startverschleiß, an den Dichtlippen bei doppellippigen Dichtsystemen gegenüber dem gegenwärtigen Stand der Technik deutlich minimiert, die Leckageverluste gegenüber dem Stand der Technik deutlich senkt, zudem zuverlässig Stillstandsleckagen vermeidet, gleichzeitig fertigungstechnisch einfach herstell- und montierbar ist, dadurch die Fertigungs- und Montagekosten in der Endfertigung deutlich reduziert, und so neben der Lebensdauer auch die Zuverlässigkeit so deutlich erhöht, dass auch nach längerer Einsatzzeit noch eine "luftfreie" Vakuumbefüllung von Kühlmittelpumpen möglich ist.

Erfindungsgemäß wird diese Aufgabe durch eine Radialwellendichtung nach den Merkmalen des Hauptanspruches der Erfindung gelöst.

Vorteilhafte Ausführungen, Einzelheiten und Merkmale der Erfindung ergeben sich aus den Unteransprüchen sowie der nachfolgenden Beschreibung der erfindungsgemäßen Ausführungsbeispiele in Verbindung mit den Zeichnungen zur erfindungsgemäßen Lösung.

Nachfolgend wird die Erfindung an Hand eines Ausführungsbeispieles in Verbindung mit vier Figuren näher erläutert.

Es zeigen dabei:
- Figur 1 :: die erfindungsgemäße Radialwellendichtung in eingebauten Zustand in der Seitenansicht im Schnitt, nach der Endmontage, d.h. nach dem Einbau z.B. in eine Kühlmittelpumpe;
- Figur 2 :: die erfindungsgemäße Radialwellendichtung mit eingesetzter Laufhülse 10, vor der Endmontage in der Draufsicht;
- Figur 3:: die erfindungsgemäße Radialwellendichtung mit eingesetzter Laufhülse 10, vor der Endmontage, gemäß Figur 2, in der Seitenansicht, im Schnitt bei A-A;
- Figur 4:: die erfindungsgemäße Radialwellendichtung ohne Laufhülse 10, vor der Endmontage, in der Seitenansicht im Schnitt;
- Figur 5:: die Einzelheit X der erfindungsgemäßen Radialwellendichtung gemäß Figur 4, mit einer Darstellung der erfindungsgemäßen Innenlippe 20;
- Figur 6:: die Einzelheit Y der erfindungsgemäßen Radialwellendichtung gemäß Figur 4, mit einer Darstellung der erfindungsgemäßen Außenlippe 19.

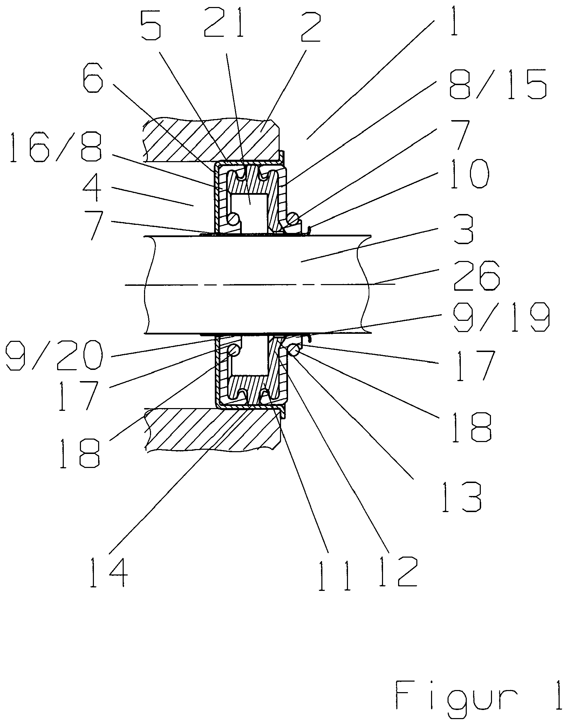

In der Figur 1 ist die erfindungsgemäße Radialwellendichtung im Einbauzustand in einer Kühlmittelpumpe, d.h. nach der Endmontage, dargestellt.

Diese Figur 1 zeigt die erfindungsgemäße Radialwellendichtung zur Abdichtung einer aus einem mit einem fluiden Medium gefüllten Druckraum 1 eines Arbeitsgehäuses 2 herausgeführten rotierenden Welle 3 gegenüber einem Außenraum 4, vorzugsweise der Atmosphäre.

In einer Bohrung des Arbeitsgehäuses 2 ist ein metallisches Dichtungsgehäuse 5 mit einer Rückwand 6 angeordnet.

In dieser Rückwand 6 befindet sich eine Wellendurchtrittsbohrung 7. Im Dichtungsgehäuse 5 sind zwei aus elastischem Material bestehende ringförmige Dichtkörper 8 angeordnet, die mit den, an diesen Dichtkörpern 8 angeordneten Dichtlippen 9 direkt an einer auf der Welle 3 drehfest angeordneten Laufhülse 10 anliegen, wobei beide Dichtkörper 8 im Dichtungsgehäuse 5 gleichzeitig mittels eines ringförmigen metallischen Stützkörpers 11 positioniert sind.

Erfindungswesentlich ist, dass an dem im Dichtungsgehäuse 5 zu positionierenden metallischen Stützkörper 11 eine Anlageplatte 12 mit einer Wellendurchtrittsbohrung 7 angeordnet ist, und der Außenrand 14 des im Dichtungsgehäuse 5 zu positionierenden Stützkörpers 11 gegenüber dem Innenradius des Dichtungsgehäuses 5 ein Übermaß aufweist, und der Stützkörper 11 daher mit Presssitz im Dichtungsgehäuse 5 gefügt ist.

Dieser Presssitz des metallischen Stützkörpers 11 im metallischen Dichtungsgehäuse 5 gewährleistet auch bei Temperaturveränderungen einen sicheren Sitz des Stützkörpers 11 im Dichtungsgehäuse 5.

Kennzeichnend ist in diesem Zusammenhang auch, dass am Stützkörper 11 zwei Dichtkörper 8, d.h. druckseitig ein Außenlippenelement 15 und atmosphärenseitig ein Innenlippenelement 16 derart positioniert sind, dass das Außenlippenelement 15 an der Anlageplatte 12 des Stützkörpers 11, und das Innenlippenelement 16 an der Rückwand 6 des Dichtungsgehäuses 5 vollflächig anliegt, so dass selbst unter hoher Druckbeaufschlagung beide Dichtkörper 8 gleichzeitig lagestabil im Dichtungsgehäuse 5 positioniert sind.

Erfindungswesentlich ist dabei auch, dass sowohl am Außenlippenelement 15 wie auch am Innenlippenelement 16, im jeweils an der Welle 3 bzw. der Laufhülse 10 anliegenden Bereich, ein stets nur zur Druckseite hin ausgeformter Dichtzylinder in der Bauform einer zylinderförmigen Dichtlippe 9, mit einer am Außenumfang des Dichtzylinders angeordneten Außennut 17 angeordnet ist, wobei in diesen Außennuten 17 der Dichtlippen 9 jeweils eine Schnurfeder 18 angeordnet ist, die sowohl den Dichtzylinder des Außenlippenelementes 15, die Außenlippe 19, wie auch den Dichtzylinder des Innenlippenelementes 16, die Innenlippe 20, gegen die Welle 3 bzw. die drehfest auf der Welle 3 anzuordnende Laufhülse 10 anpresst, so dass zwischen dem jeweiligen Dichtzylinder und der Welle 3, bzw. der Laufhülse 10, stets ein optimaler Anpressdruck bei rotierender Welle 3 gewährleistet ist, die unter anderem auch die Leckageverluste minimiert, und nicht zuletzt Stillstandsleckagen vermeidet.

Wesentlich ist aber auch, dass von der Außenlippe 19, dem Stützkörper 11, dem Innenlippenelement 16 mit der Innenlippe 20 und der Welle 3, bzw. der Laufhülse 10, eine allseitig abgedichtete Schmierkammer 21 ausgebildet wird, wobei die an der Welle 3 bzw. an der Laufhülse 10 anliegenden Dichtzylinder der Dichtlippen 9, das heißt sowohl der Dichtzylinder der Außenlippe 19, wie auch der Dichtzylinder der Innenlippe 20 in drei nebeneinander liegende Dichtzylinderbereiche derart unterteilt sind, dass jeweils an der Druckseite der Außenlippe 19, wie auch druckseitig an der Innenlippe 20 stets eine Eintrittskonusfläche 22, und gegenüberliegend an der Unterdruckseite der Außenlippe 19, wie auch unterdruckseitig an der Innenlippe 20 stets eine Austrittskonusfläche 23 angeordnet ist, und zwischen diesen eine zylindrische Kontaktzone 24 angeordnet ist, und dass die Nutmittenachse 25 der Außennut 17 im Übergangsbereich von der Kontaktzone 24 zur Austrittskonusfläche 23 angeordnet ist.

Dadurch kann ein exakt definierter Druckverlauf über die gesamte, mit der Welle 3 bzw. der Laufhülse 10 in Wirkverbindung tretende Arbeitsbreite der jeweiligen Dichtlippe 9 gewährleistet werden.

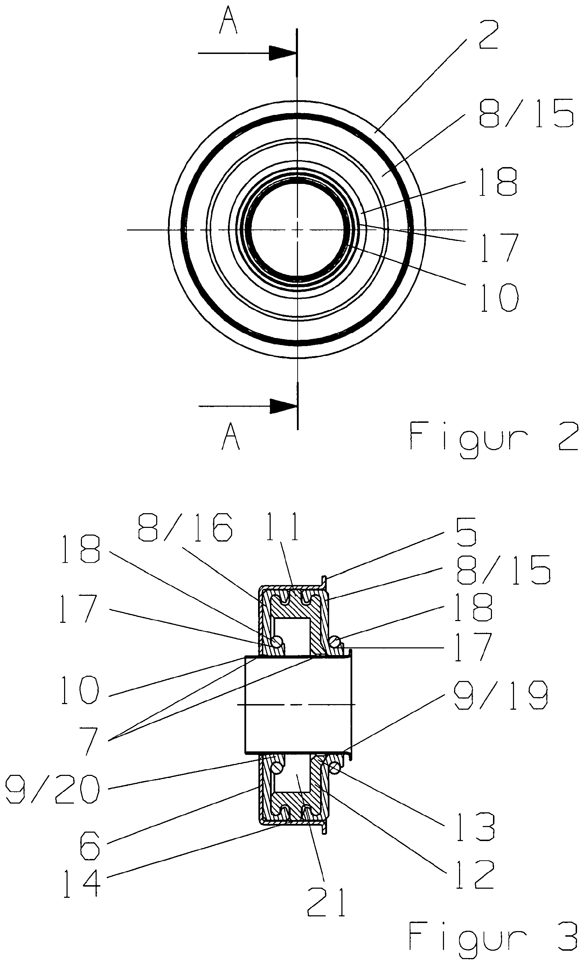

Diese in Verbindung mit der Figur 1 soeben beschriebene erfindungsgemäße Radialwellendichtung ist in der Figur 2 mit eingesetzter Laufhülse 10, d.h. vor der Endmontage, in der Draufsicht dargestellt.

Die Figur 3 zeigt diese die erfindungsgemäße Radialwellendichtung nach der Figur 2, in der Seitenansicht, im Schnitt bei A-A.

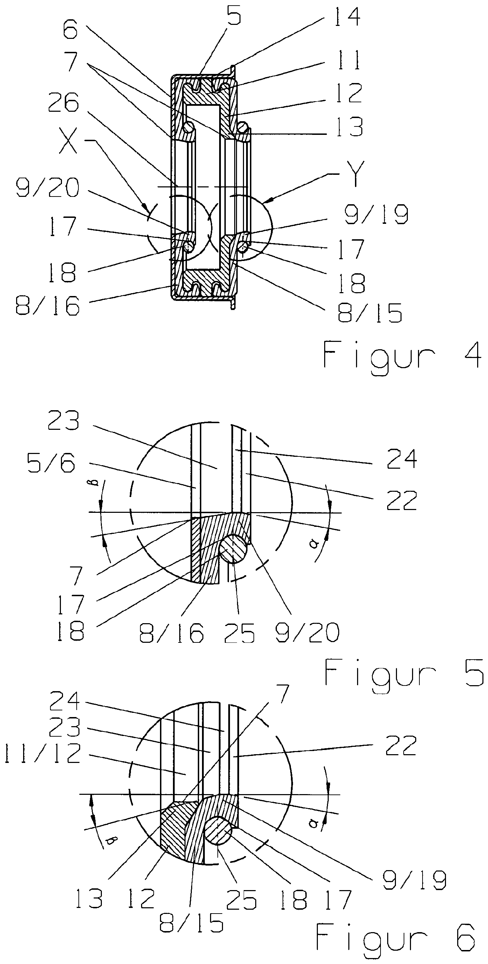

In der Figur 4 ist zur Verdeutlichung der erfindungsgemäßen Ausbildung der Dichtlippen 9 nun die erfindungsgemäße Radialwellendichtung ohne eine Laufhülse 10, in der Seitenansicht im Schnitt dargestellt.

Die Figur 5 zeigt die Einzelheit X der erfindungsgemäßen Radialwellendichtung gemäß Figur 4, mit einer Darstellung der erfindungsgemäßen Innenlippe 20, und in der Figur 6 ist die Einzelheit Y der erfindungsgemäßen Radialwellendichtung gemäß Figur 4, mit der erfindungsgemäßen Außenlippe 19 dargestellt.

Dabei zeigen insbesondere die Figuren 5 und 6 die erfindungsgemäße Ausbildung der Dichtlippen, die sich dadurch auszeichnen, dass die Eintrittskonusfläche 22 gegenüber der Wellenachse 26 einen Eintrittskonus mit einem Druckeintrittswinkel α aufweist, welcher erfindungsgemäß im Bereich von 1° bis 10° liegt.

Erfindungswesentlich ist, wie ebenfalls in den Figuren 5 und 6 dargestellt, dass die Zylinderwandung der Kontaktzone 24 rotationssymmetrisch zur Wellenachse 26 verläuft, und die Austrittskonusfläche 23 gegenüber der Wellenachse 26 einen Austrittskonus mit einem Druckaustrittswinkel β von 1° bis 15° aufweist.

Die erfindungsgemäße Eintrittskonusfläche 22 der Außenlippe 19 bewirkt im Betriebszustand, d.h. wie in der Figur 1 dargestellt unter Arbeitsdruck im Druckraum 1, einen Druckaufbau im Bereich hin zur Kontaktzone 24, welche unter Federdruckbelastung der Schnurfeder 18 einen minimalen Arbeitsdichtspalt gewährleistet, so dass bei minimalen Leckageverlusten, mittels der erfindungsgemäßen Lösung, über die Austrittskonusfläche 23 bei gleichzeitigem Druckabfall zur Schmierkammer 21 hin, eine Minimierung des Mischreibungsbereiches realisiert wird.

Der nahezu analoge Aufbau der Innenlippe 20 erzielt in analoger Weise die in Verbindung mit der Außenlippe 19 beschriebenen Wirkungen, lediglich auf einem reduzierten Druckniveau, d.h. vom Innendruck in der Schmierkammer zum atmosphärischen Druck im Außenraum 4.

Erfindungswesentlich ist auch, dass der Stützkörper 11 im Bereich der Wellendurchtrittsbohrung 7 einen ringförmig, druckseitig abgewinkelten Außenlippenanlagesteg 13 aufweist, der ein Extrudieren des durch den Arbeitsdruck belasteten, elastischen Materials der Außenlippe 19 in den Spalt zwischen der Wellendurchtrittsbohrung 7 des Stützkörpers 11 und der Welle 3 bzw. Laufhülse 10 vermeidet.

Wesentlich ist weiterhin, dass in der gesamten Schmierkammer 21 der erfindungsgemäßen Radialwellendichtung ein bei Raumtemperatur fließfähiges Schmiermedium, mit einer kinematischen Viskosität im Bereich von 5.000 mm²/s bis 1.000 mm²/s unter einem Restüberdruck nach Befüllung von 0,005 bar bis 0,01 bar angeordnet ist, d.h. dass nach der Befüllung die Schmierkammer stets vollständig befüllt ist und das Schmiermedium in der Schmierkammer unter leichtem Überdruck steht.

Im vorliegenden Ausführungsbeispiel beträgt das Volumen der Schmierkammer 21, bei einem Dichtungsdurchmesser von 30 mm ca. 1 cm³.

Die Kombination der erfindungsgemäßen Anordnung der erfindungsgemäßen Dichtlippengeometrien mit dem erfindungsgemäß in der erfindungsgemäßen Schmierkammer 21 angeordneten Schmiermedium bewirkt einen solchen überraschenden erfindungsgemäßen tribologischen Effekt, dass selbst "end of line" Motorentests mit Kühlmittelpumpen ohne Kühlflüssigkeit, d.h. Trockenlauf-Tests der erfindungsgemäßen Radialwellendichtung mit bis zu 4000 U/min über 12 Stunden Testzeit, keine funktionsbeeinträchtigende Vorschädigung der Dichtlippen zur Folge hatten.

Dabei wurde unter diesen extremen Bedingungen die vorbeschriebene erfindungsgemäße optimale Dichtfunktion bei minimalsten Verschleiß der Dichtlippen überraschender Weise erst in Verbindung mit den erfindungsgemäßen flachen Konuswinkeln an der Lippengeometrie erreicht.

In durchgeführten Dauertests über ca. 7.300 h zeigte die erfindungsgemäße Radialwellendichtung in Verbindung mit dem Einsatz in Kühlmittelpumpen zudem weiterhin ein erstaunliches Leckageverhalten, bei dem Phasen mit sehr geringer, jedoch noch messbarer Leckage wiederkehrend von Phasen mit nicht messbarer Leckage abgelöst wurden.

Durch diesen wiederkehrenden Effekt von unterschiedlichen Leckage-Phasen kann man durchaus von "Selbstoptimierungseffekten" im Dichtungsverhalten sprechen, wobei dieser bisher technisch allerdings noch nicht begründet werden kann.

In den Praxistests mit den erfindungemäßen, in Kühlmittelpumpen integriereten, Radialwellendichtungen wurde eineindeutig bestätigt, dass selbst "end of line" Motorentests, mit Kühlmittelpumpen ohne Kühlflüssigkeit über mehrere Stunden ohne Beschädigung der erfindungsgemäßen Radialwellendichtung problemlos möglich sind.

Somit gewährleistet die erfindungsgemäße Radialwellendichtung selbst unter extremsten Bedingungen eine hohe Zuverlässigkeit und eine lange Lebensdauer.

Vorteilhaft ist auch, wenn die Radialwellendichtung, wie in den Figuren 2 und 3 dargestellt mit einer Laufhülse 10 vormontiert, und dabei in der Schmierkammer 21 bereits das erfindungsgemäße Schmiermedium angeordnet ist.

Die so vormontierten erfindungsgemäßen Radialwellendichtungen ermöglichen einen einfachen Einbau, z.B. in Kühlmittelpumpen, und gewährleisten durch den Einsatz von feinstbearbeiteten Laufhülsen 10, beispielsweise aus Edelstahl, eine Minimierung des Verschleißes der Dichtlippen 9, bei gleichzeitiger optimaler Schmierung der Dichtlippen 9 durch das erfindungsgemäß in der Schmierkammer 21 angeordnete, Schmiermedium, welches zudem gleichzeitig die aus gummielastischen Material bestehenden Dichtlippen kontinuierlich kühlt, und diese auch kontinuierlich während des Betriebseinsatzes "pflegt" / schmiert, und dadurch vermeidet, das der Gummi der Dichtlippen aushärtet und sich beispielsweise in den "Laufbereich" der Welle 3, bzw. Laufhülse 10 "eingräbt" und dabei verschleißt.

Gleichzeitig erhöht die so vormontierte Radialwellendichtung mit dem erfindungsgemäßen Arbeitsdruck in der Schmierkammer 21 die Zuverlässigkeit, und bewirkt gleichzeitig eine deutliche Reduzierung der Montagekosten in der Fertigung z.B. beim Einsatz der erfindungsgemäßen Radialwellendichtung in Kühlmittelpumpen.

Mit der erfindungsgemäßen Lösung ist es gelungen eine neuartige Radialwellendichtung zur Abdichtung einer aus einem mit einem fluiden Medium gefüllten Raum herausgeführten rotierenden Welle gegenüber der Atmosphäre zu entwickeln, welche auch in Kühlmittelpumpen, unter Einsatz von dünnflüssigen, wasserbasierenden Kühlmitteln mit leicht schmierenden Zusätzen, die Nachteile des Standes der Technik beseitigt, und selbst "end of line" Motorentests mit Kühlmittelpumpen ohne Kühlflüssigkeit, und in den Kühlmittelpumpen integrierten erfindungsgemäßen Radialwellendichtungen, über bis zu mehrere Stunden ohne Beschädigung der Radialwellendichtung ermöglicht, und bei rotierender Welle den Verschleiß an den Dichtlippen bei doppellippigen Dichtsystemen gegenüber dem gegenwärtigen Stand der Technik deutlich minimiert, die Leckageverluste gegenüber dem Stand der Technik deutlich senkt, zudem zuverlässig Stillstandsleckagen vermeidet, gleichzeitig fertigungstechnisch einfach herstell- und montierbar ist, und dadurch die Fertigungs- und Montagekosten in der Endfertigung deutlich reduziert, und gleichzeitig neben der Lebensdauer auch die Zuverlässigkeit so deutlich erhöht, dass auch nach längerer Einsatzzeit noch eine "luftfreie" Vakuumbefüllung möglich ist.

### Bezugszeichenzusammenstellung

- 1: Druckraum
- 2: Arbeitsgehäuse
- 3: Welle
- 4: Außenraum
- 5: Dichtungsgehäuse
- 6: Rückwand
- 7: Wellendurchtrittsbohrung
- 8: Dichtkörper
- 9: Dichtlippe
- 10: Laufhülse
- 11: Stützkörper
- 12: Anlageplatte
- 13: Außenlippenanlagesteg
- 14: Außenrand
- 15: Außenlippenelement
- 16: Innenlippenelement
- 17: Außennut
- 18: Schnurfeder
- 19: Außenlippe
- 20: Innenlippe
- 21: Schmierkammer
- 22: Eintrittskonusfläche
- 23: Austrittskonusfläche
- 24: Kontaktzone
- 25: Nutmittenachse
- 26: Wellenachse
- α: Druckeintrittswinkel
- β: Druckaustrittswinkel

## Patentansprüche

1. Radialwellendichtung zur Abdichtung einer aus einem mit einem fluiden Medium gefüllten Druckraum (1) eines Arbeitsgehäuses (2) herausgeführten rotierenden Welle (3) gegenüber einem Außenraum (4), wie der Atmosphäre, mit einem in einer Bohrung des Arbeitsgehäuses (2) angeordneten metallischen Dichtungsgehäuse (5) mit einer Rückwand (6) und einer in dieser Rückwand (6) angeordneten Wellendurchtrittsbohrung (7), wobei im Dichtungsgehäuse (5) mehrere aus elastischen Material bestehende ringförmige Dichtkörper (8) angeordnet sind, die mit der/den an diesem/diesen Dichtkörper/n (8) angeordneten Dichtlippe/n (9), direkt an einer Welle (3), oder einer auf der Welle (3) drehfest angeordneten Laufhülse (10) anliegt/anliegen, wobei der/die Dichtkörper (8) im Dichtungsgehäuse (5) mittels eines ringförmigen metallischen Stützkörper (11) positioniert ist/sind, **dadurch gekennzeichnet,**
- **dass** an dem im Dichtungsgehäuse (5) zu positionierenden metallischen Stützkörper (11) eine Anlageplatte (12) mit einer Wellendurchtrittsbohrung (7) angeordnet ist, wobei der Außenrand (14) des im Dichtungsgehäuse (5) zu positionierenden Stützkörpers (11) gegenüber dem Innenradius des Dichtungsgehäuses (5) ein Übermaß aufweist, und der Stützkörper (11) daher mit Presssitz im Dichtungsgehäuse (5) gefügt ist, und
- **dass** am Stützkörper (11) zwei Dichtkörper (8), d.h. druckseitig ein Außenlippenelement (15) und atmosphärenseitig ein Innenlippenelement (16) derart positioniert sind, dass das Außenlippenelement (15) an der Anlageplatte (12) und dem Außenlippenanlagesteg (13) des Stützkörpers (11), und das Innenlippenelement (16) an der Rückwand (6) des Dichtungsgehäuses (5) vollflächig anliegt, und
- **dass** sowohl am Außenlippenelement (15) wie auch am Innenlippenelement (16), im jeweils an der Welle (3) bzw. der Laufhülse (10) anliegenden Bereich, ein stets nur zur Druckseite hin ausgeformter Dichtzylinder in der Bauform einer zylinderförmigen Dichtlippe (9), mit einer am Außenumfang des Dichtzylinders angeordneten Außennut (17) angeordnet ist, wobei in diesen Außennuten (17) jeweils eine Schnurfeder (18) angeordnet ist, die sowohl den Dichtzylinder des Außenlippenelementes (15), die Außenlippe (19), wie auch den Dichtzylinder des Innenlippenelementes (16), die Innenlippe (20), gegen die Welle (3) bzw. die drehfest auf der Welle (3) anzuordnende Laufhülse (10) anpresst, so
- **dass** von der Außenlippe (19), dem Stützkörper (11), dem Innenlippenelement (16) mit der Innenlippe (20) und der Welle (3), bzw. der Laufhülse (10), eine allseitig abgedichtete Schmierkammer (21) ausgebildet wird, wobei die an der Welle (3) bzw. an der Laufhülse (10) anliegenden Dichtzylinder der Dichtlippen (9), das heißt sowohl der Dichtzylinder der Außenlippe (19), wie auch der Dichtzylinder der Innenlippe (20) in drei nebeneinander liegende Dichtzylinderbereiche derart unterteilt sind, dass jeweils an der Druckseite der Außenlippe (19), wie auch druckseitig an der Innenlippe (20) stets eine Eintrittskonusfläche (22), gegenüberliegend an der Unterdruckseite der Außenlippe (19), wie auch unterdruckseitig an der Innenlippe (20) stets eine Austrittskonusfläche (23) angeordnet ist, und zwischen diesen eine zylindrische Kontaktzone (24) angeordnet ist, wobei die Nutmittenachse (25) der Außennut (17) im Übergangsbereich von der Kontaktzone (24) zur Austrittskonusfläche (23) angeordnet ist, und
- **dass** die Eintrittskonusfläche (22) gegenüber der Wellenachse (26) einen Eintrittskonus mit einem Druckeintrittswinkel (α) von 1° bis 10° aufweist, die Zylinderwandung der Kontaktzone (24) rotationssymmetrisch zur Wellenachse (26) verläuft, und die Austrittskonusfläche (23) gegenüber der Wellenachse (26) einen Austrittskonus mit einem Druckaustrittswinkel (β) von 1° bis 15° aufweist, und
- **dass** in der gesamten Schmierkammer (21) der erfindungsgemäßen Radialwellendichtung ein bei Raumtemperatur fließfähiges Schmiermedium, mit einer kinematischen Viskosität im Bereich von 5.000 mm²/s bis 1.000 mm²/s unter einem Restüberdruck nach Befüllung von 0,005 bar bis 0,01 bar angeordnet ist.

2. Radialwellendichtung nach Anspruch 1 **dadurch gekennzeichnet, dass** der Stützkörper (11) im Bereich der Wellendurchtrittsbohrung (7) einen ringförmig, druckseitig abgewinkelten Außenlippenanlagesteg (13) aufweist.

## Claims

1. Radial shaft seal for sealing a rotating shaft (3) leading out from a pressure compartment (1) filled with a fluid medium and a working housing (2) against an exterior space (4) such as the atmosphere with a metallic sealing housing (5) located in a hole of the working housing (2) with a back wall (6) and a shaft opening (7) located in this back wall (6), whereby several ring-shaped sealing bodies (8) out of elastic material are located in the sealing housing (5) which fit(s) directly on a shaft (3) with a sealing lip(s) (9) directly at this / these sealing body(ies) (8) or which fits / fit on a torque-proof bearing bush (10) on the shaft (3), whereby the sealing body(ies) (8) is/are positioned in the sealing housing (5) by using a ring-shaped metallic support body (11), **characterized by** the fact
- that an installation plate (12) with a shaft opening (7) is located at the metallic support body (11) to be positioned in the sealing housing (5), whereby the exterior edge (14) of the support body (11) to be positioned in the sealing housing (5) is of a larger size than the interior diameter of the sealing housing (5) and support body (11) is therefore inserted into the sealing housing (5) with a press fit, and
- that two sealing bodies (8), an exterior lip element (15) on the pressure side and an interior lip element (16) on the atmospheric side-- are positioned at the support body (11) in such a way, that the exterior lip element (15) lies on the entire surface of the installation plate (12) and the exterior lip of the installation bridge (13) of the support body (11) and the interior lip element (16) lie at the back wall (6) of the sealing housing (5), and
- that a sealing cylinder only shaped in the form of a sealing cylinder to the pressure side of a cylindrically shaped sealing lip (9) with an exterior slot (17) on the exterior circumference of the sealing cylinder is located both at the exterior lip element (15) and also at the interior lip element (16) in a region adjacent to the shaft (3) or the bearing bush (10) respectively, whereby a flex spring (18) is located in these exterior slots (17) respectively which presses against both the sealing cylinder of the exterior lip element (15), the exterior lip (19) and also against the sealing cylinder of the interior lip element (16) with the interior lip (20) pressing against the shaft (3) or against the bearing bush (10) on the shaft (3) to be torque free so
- that a lubrication chamber (21) sealed on all sides is formed by the exterior lip (19), the support body (11), the interior lip element (16) with the interior lip (20) and the shaft (3) or the bearing bush (10), whereby the adjacent sealing cylinder of the sealing lips (9) at the shaft (3) or the bearing bush (10), that means both the sealing cylinder of the exterior lip (19) and also the sealing cylinder of the interior lip (20) are subdivided into three sealing cylinder regions next to each other in such a way that an intake conical surface (22) is always arranged on the pressure side of the exterior lip (19) and also on the pressure side of the interior lip (20) with a discharge conical surface (23) always arranged on the under pressure side of the exterior lip (19) and also on the under pressure side of the interior lip (20) with a cylindrical contact zone (24) arranged between them, whereby the central slot axis (25) of the exterior slot (17) is arranged in the transition region from the contact zone (24) to the discharge conical surface (23), and
- that the intake conical surface (22) has an intake cone with a pressure intake angle (α) of 1° to 10° compared to the shaft axis (26), that the cylindrical wall of the contact zone (24) runs rotationally symmetric to the shaft axis (26) and that the discharge conical surface (23) has a discharge cone with a pressure discharge angle (β) of 1° to 15° compared to the shaft axis (26), and
- that a lubricant which is fluid at room temperature, with a kinematic viscosity of 5,000 mm²/s to 1,000 mm²/s under residual pressure after filling from 0.005 bar to 0.01 bar is located in the entire lubrication chamber (21) of the radial shaft seal according to the invention.

2. Radial shaft seal, according to claim 1, **characterized by** the fact that the support body (11) has a ring-shaped exterior lip of the installation bridge (13) in the region of the shaft opening (7).

## Revendications

1. Joint d'arbre radial pour l'étanchéité d'un arbre (3) rotatif extrait d'un espace de pression (1) d'un carter de travail (2) rempli d'un matériau fluide et situé vis-à-vis d'un espace extérieur (4), comme l'atmosphère, avec un carter d'étanchéité (5) métallique disposé dans un perçage du carter de travail (2), avec une paroi arrière (6) et un perçage de passage d'arbre (7) disposé dans cette paroi arrière (6), plusieurs corps d'étanchéité (8) de forme annulaire et composés d'un matériau élastique étant disposés dans le carter d'étanchéité (5), lesquels corps d'étanchéité (8), avec la/les lèvre/s d'étanchéité (9) disposée/s sur ce/ces corps d'étanchéité (8), repose/reposent directement sur un arbre (3) ou sur une douille mobile (10) placée sur l'arbre (3) fixement quant à la rotation, le/les corps d'étanchéité (8) dans le carter d'étanchéité (5) étant positionné/s au moyen d'un corps de support (11) métallique de forme annulaire, **caractérisé par le fait**
- **que**, sur le corps de support (11) métallique devant être positionné dans le carter d'étanchéité (5), une plaque d'appui (12) pourvue d'un perçage de passage d'arbre (7) est disposée, le rebord extérieur (14) du corps de support (11) métallique devant être positionné dans le carter d'étanchéité (5) présentant un surdimensionnement par rapport au rayon intérieur du carter d'étanchéité (5), le corps de support (11) étant pour cette raison fixé dans le carter d'étanchéité (5) avec un ajustement serré, et
- **que**, sur le corps de support (11), deux corps d'étanchéité (8), c'est-à-dire du côté pression un élément de lèvre extérieure (15) et du côté atmosphère un élément de lèvre intérieure (16), sont positionnés de telle manière que l'élément de lèvre extérieure (15) repose sur toute sa surface sur la plaque d'appui (12) et la barrette d'appui de lèvre extérieure (13) du corps de support (11), et que l'élément de lèvre intérieure (16) repose sur toute sa surface sur la paroi arrière (6) du carter d'étanchéité (5), et
- **que**, aussi bien sur l'élément de lèvre extérieure (15) que sur l'élément de lèvre intérieure (16), dans la zone reposant respectivement sur l'arbre (3) voire sur la douille mobile (10), est disposé un cylindre d'étanchéité formé uniquement et en permanence vers le côté pression et construit selon une lèvre d'étanchéité (9) cylindrique, avec une gorge extérieure (17) placée sur le pourtour extérieur du cylindre d'étanchéité, un ressort (18) étant respectivement disposé dans ces gorges extérieures (17), lequel pressant aussi bien le cylindre d'étanchéité de l'élément de lèvre extérieure (15), la lèvre extérieure (19), tout comme le cylindre d'étanchéité de l'élément de lèvre intérieure (16), la lèvre intérieure (20), contre l'arbre (3) voire contre le douille mobile (10) placée sur l'arbre (3) fixement quant à la rotation, et
- **qu'**une chambre de lubrification (21) étanche de tous les côtés et formée par la lèvre extérieure (19), le corps de support (11), l'élément de lèvre intérieure (16) avec la lèvre intérieure (20) et l'arbre (3) voire la douille mobile (10), les cylindres d'étanchéité des lèvres d'étanchéité (9) sur l'arbre (3) voire sur la douille mobile (10), c'est-à-dire aussi bien le cylindre d'étanchéité de la lèvre extérieure (19) que le cylindre d'étanchéité de la lèvre intérieure (20), sont divisés en trois zones de cylindre d'étanchéité placées côte-à-côte de telle manière qu'une surface conique d'entrée (22) soit en permanence disposée respectivement sur le côté de pression de la lèvre extérieure (19) tout comme sur le côté de pression de la lèvre intérieure (20), et qu'une surface conique de sortie (23) soit en permanence disposée en opposé sur le côté de sous-pression de la lèvre extérieure (19) tout comme sur le côté de sous-pression de la lèvre intérieure (20), et qu'une zone de contact (24) cylindrique soit disposée entre ces surfaces, l'axe central de gorge (25) de gorge extérieure (17) étant placé dans la zone de passage allant de la zone de contact (24) à la surface conique de sortie (23), et
- **que** le surface conique d'entrée (22) présente par rapport à l'axe d'arbre (26) un cône d'entrée pourvu d'un angle d'entrée de pression (α) compris entre 1° et 10°, la paroi de cylindre de la zone de contact (24) présentant une symétrie de rotation par rapport à l'axe d'arbre (26) et que la surface conique de sortie (23) présente par rapport à l'axe d'arbre (26) un angle de sortie de pression (β) compris entre 1° et 15°, et
- **que**, dans la totalité de chambre de lubrification (21) du joint d'arbre radial conforme à l'invention, est disposé un matériau de lubrification fluide à température ambiante présentant une viscosité cinématique comprise dans la plage 5000 mm²/s à 1000 mm²/s sous une surpression restante après remplissage de 0,005 bar à 0,01 bar.

2. Joint d'arbre radial selon l'exigence 1 **caractérisé par le fait que** le corps de support (11) présente dans la zone de perçage de passage d'arbre (7) une barrette d'appui de lèvre extérieure (13) de forme annulaire et coudée sur le côté pression.
